# EUROPEAN PATENT APPLICATION

(11) **EP 3 934 157 A1**
(43) Date of publication of application: **05.01.2022**
(21) Application number: 20763023.7
(22) Date of filing: 30.01.2020
(51) Int. Cl.: H04L 7/00, H04N 21/43, H04N 21/442

(54) **CAMERA VIDEO TRANSMISSION/PLAYBACK SYSTEM, AND CAMERA AND VIEWER CONFIGURING SAME**

(30) Priority: 26.02.2019 JP 2019032796
(71) Applicant: Panasonic Intellectual Property Management Co., Ltd., Osaka-shi, Osaka 540-6207 (JP)
(72) Inventor: NAKASHIMA, Yoshinori, Osaka-shi (JP); TAKEDA, Shin'ya, Osaka-shi (JP); YAMAMOTO, Yukiko, Osaka-shi (JP); OCHI, Taketoshi, Osaka-shi (JP)
(74) Representative: Grünecker Patent- und Rechtsanwälte PartG mbB
(86) International application number: PCT/JP2020/003375
(87) International publication number: WO 2020/174994

(57) **Abstract**

A camera video transmission and playback system according to the present disclosure includes a camera and a viewing device. The camera generates and records first video data including a plurality of image frames with time stamps synchronized on an external network, and simultaneously transmits the first video data to the viewing device via the external network. The viewing device displays the first video data transmitted from the camera via the external network, simultaneously records the first video data as second video data, and periodically calculates a round trip time in packet transmission to and from the camera. When receiving a marker assigning command from the viewing device via the external network, the camera assigns a marker to one of the plurality of image frames with a time stamp indicating a time corrected based on the round trip time in the first video data that is captured by and is being recorded in the camera.

## Description

### TECHNICAL FIELD

The present disclosure relates to a camera video transmission and playback system using a camera.

### BACKGROUND ART

Real-time bidirectional communication between a camera operator at a remote place and a viewer of a viewing device is achieved by a video transmitted from a camera, particularly a wearable camera, to a personal computer (PC, i.e. viewing device) via an Internet line or the like and an audio mutually exchanged.

Such a wearable camera includes an imaging unit and a main body unit separated from each other. The imaging unit is attached to an operator's head or the like using a head mount or the like, and the main body unit is attached to an operator's waist or the like. This enables the camera operator to shoot a video viewed by the operator and transmit the video to the PC (viewing device) in a handsfree manner.

### Citation List

### Patent Literature

PTL 1: Unexamined Japanese Patent Publication No. 2003-169040
PTL 2: Unexamined Japanese Patent Publication No. 2009-182754
PTL 3: Unexamined Japanese Patent Publication No. 2011-029969
PTL 4: Unexamined Japanese Patent Publication No. 2009-239762
PTL 5: Unexamined Japanese Patent Publication No. 2007-306144
PTL 6: Japanese Translation of PCT International Application No. 2017-517922
PTL 7: Unexamined Japanese Patent Publication No. 2001-157183

### SUMMARY OF THE INVENTION

The present disclosure provides a camera video transmission and playback system including a camera and a viewing device. In the system, when a viewer of the viewing device assigns a marker to a portion at a certain time in a video from a camera operator, the marker is set to a portion at an appropriate time in video data recorded in a main body unit of the camera of the camera operator.

The present disclosure further provides a camera video transmission and playback system that achieves real-time transmission of video data from a camera to a viewing device, and accuracy of transmission and reception of trajectory and coordinate information of a drawing displayed with it being superimposed on the video data.

The camera video transmission and playback system according to the present disclosure includes a camera and a viewing device. The camera generates and records first video data including a plurality of image frames with time stamps synchronized on an external network, and simultaneously transmits the first video data to the viewing device via the external network. The viewing device displays the first video data transmitted from the camera via the external network, simultaneously records the first video data as second video data, and periodically calculates a round trip time in packet transmission to and from the camera. When receiving a marker assigning command from the viewing device via the external network, the camera assigns a marker to one of the plurality of image frames with a time stamp indicating a time corrected based on the round trip time in the first video data that is captured by and is being recorded in the camera.

In the camera video transmission and playback system including the camera and the viewing device according to the present disclosure, in the case where the viewer assigns a marker to a portion at a certain time in a video transmitted from the camera operator, the marker can be set to a portion at an appropriate time in video data recorded in a main body unit of the camera of the camera operator.

Furthermore, the camera video transmission and playback system according to the present disclosure achieves real-time transmission of video data from the camera to the viewing device, and accuracy of transmission and reception of trajectory and coordinate information about a drawing displayed with it being superimposed on the video data.

### BRIEF DESCRIPTION OF DRAWINGS

FIG. 1A is an overall configuration view of a camera video transmission and playback system according to a first exemplary embodiment at a time of shooting and transmitting a video.
FIG. 1B is a block diagram illustrating an overall configuration of the camera video transmission and playback system according to the first exemplary embodiment at the time of shooting and transmitting a video.
FIG. 2 is a diagram illustrating video data and audio data each having a time stamp based on a camera and transmitted from the camera to a viewing device, and audio data having a time stamp and transmitted from the viewing device to the camera.
FIG. 3 is a diagram illustrating an image example of a camera image unit in a main body unit of the camera at a time when the camera in the camera video transmission and playback system according to the first exemplary embodiment shoots and transmits a video.
FIG. 4 is a diagram illustrating an image example of a viewing device image unit in the viewing device at the time when the camera in the camera video transmission and playback system according to the first exemplary embodiment shoots and transmits a video.
FIG. 5 is a sequence chart illustrating camera shooting start processing, delay time notification processing, streaming processing, viewing device (PC) recording start processing, and marker assigning processing in the camera video transmission and playback system according to the first exemplary embodiment at the time of shooting and transmitting a video.
FIG. 6 is an overall configuration view of the camera video transmission and playback system according to the first exemplary embodiment at a time of capturing and playing back content.
FIG. 7 is a diagram illustrating an image example of the viewing device image unit in the viewing device at a time when the viewing device in the camera video transmission and playback system according to the first exemplary embodiment captures and plays back content.
FIG. 8 illustrates an image example of the viewing device image unit in the viewing device, and enlarged (within the image example) time axis and display markers at the time when the viewing device captures and plays back content.
FIG. 9 is a flowchart illustrating synchronous playback processing of four videos and skip processing with marker selection in the viewing device and the camera universal serial bus (USB)-connected to the viewing device.
FIG. 10 is an overall configuration view of a camera video transmission and playback system according to a second exemplary embodiment.

### DESCRIPTION OF EMBODIMENTS

Hereinafter, exemplary embodiments will be described in detail with reference to the drawings as appropriate. However, detailed description more than necessary might be sometimes omitted. For example, the detailed description of already well-known matters and the overlapped description of substantially identical configurations may be sometimes omitted. This is to avoid the following description from being unnecessarily redundant and to facilitate understanding of those skilled in the art.

Note that the inventors of the present disclosure provide the accompanying drawings and the following description in order to allow those skilled in the art to fully understand the present disclosure, and do not intend to limit the subject matter as described in the appended claims.

### 1. Background to contemplation of exemplary embodiments

It is assumed that a video as a moving image is transmitted from a wearable camera to a viewing device (PC) via the Internet. At this time, a camera operator views a scene before the operator with the naked eye, and simultaneously a viewer of a viewing device views the video which is transmitted from the camera of the camera operator and is displayed on the viewing device (PC). This enables the camera operator and the viewer to share the substantially simultaneous video (scene). Incidentally, when the Internet is interposed between the wearable camera and the viewing device, the video transmitted from the camera operator and viewed by the viewer always includes a network delay.

Further, even if the viewer assigns a marker to a portion at a certain time (image frame) in the video transmitted from the camera operator while sharing the substantially simultaneous video (scene) with the camera operator as described above, the marker is not normally reflected in video data recorded in a main body unit of the camera of the camera operator at all. Even if a marker setting command is transmitted to the camera of the camera operator, the above-described network delay causes the setting of the marker in an image frame of the video data recorded in the main body unit of the camera of the camera operator to lag considerably behind the assignment of the marker performed by the viewer.

The present disclosure solves the above issue. The present disclosure provides a camera video transmission and playback system including a camera and a viewing device connected with each other by the Internet. In this system, when a viewer assigns a marker to a portion at a certain time in a video as a moving image transmitted from a camera operator, the marker is set in a portion at an appropriate time in video data recorded in the camera of the camera operator. Note that, although the invention according to the present disclosure can be effectively applied even if the Internet is another external network, the Internet is used as a typical external network in the following description.

### 2. First exemplary embodiment

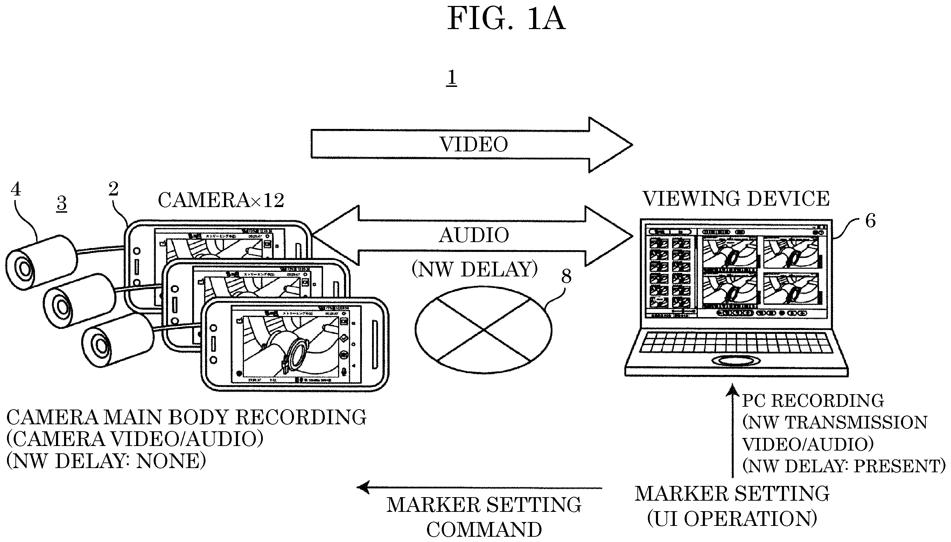

A first exemplary embodiment will be described below with reference to FIGS. 1A to 9.

### 2.1. Camera video transmission and playback system at a time of shooting and transmitting video

### 2.1.1. Overall configuration of camera video transmission and playback system at the time of shooting and transmitting video

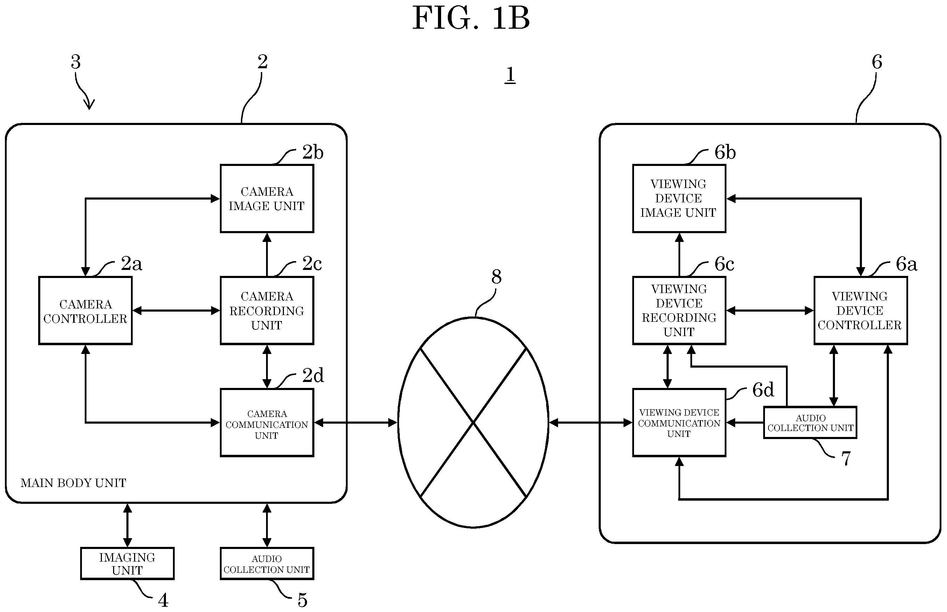

FIG. 1A is an overall configuration view of camera video transmission and playback system 1 according to the first exemplary embodiment at the time of shooting and transmitting a video. FIG. 1B is a block diagram illustrating the overall configuration of the camera video transmission and playback system according to the first exemplary embodiment at the time of shooting and transmitting a video. Camera video transmission and playback system 1 illustrated in FIG. 1A includes, for example, twelve cameras 3. Each of cameras 3 is, for example, a wearable camera that is configured by connecting imaging unit 4 that can be head-mounted to a camera operator and main body unit 2 including a tablet terminal or the like through a universal serial bus (USB) or the like. Imaging unit 4 shoots a video and generates video data. Main body unit 2 can transmit the video data generated by imaging unit 4 to an external device (for example, viewing device 6, described below) via Internet 8 as described below, and can record the video data in camera recording unit 2c. Camera 3 in the first exemplary embodiment also includes audio collection unit 5 (for example, a microphone), and for example, can transmit an audio of the camera operator to the external device (for example, viewing device 6) via Internet 8, and can record the audio in camera recording unit 2c. A number of cameras 3 may be more or less than twelve, or may be one.

As illustrated in FIG. 1B, main body unit 2 of camera 3 includes camera controller 2a, camera image unit 2b, camera recording unit 2c, and camera communication unit 2d. Camera controller 2a controls components of camera 3. Camera image unit 2b displays a video imaged by imaging unit 4. Camera recording unit 2c records video data imaged by imaging unit 4 and audio data collected by audio collection unit 5. Camera communication unit 2d transmits the video data and audio data recorded in camera recording unit 2c, the video data imaged by imaging unit 4, and the audio data collected by audio collection unit 5 to viewing device 6, and transmits and receives signals to and from viewing device 6.

Camera video transmission and playback system 1 further includes viewing device 6. Viewing device 6 is configured by a computer such as a personal computer (PC) or a workstation, which is viewed by a viewer of the viewing device such as a system administrator. As illustrated in FIG. 1B, viewing device 6 includes viewing device controller 6a, viewing device image unit 6b, viewing device recording unit 6c, viewing device communication unit 6d, and audio collection unit 7. Viewing device controller 6a controls components of viewing device 6. Viewing device image unit 6b displays a video based on video data transmitted from camera 3. Viewing device recording unit 6c records the video data and audio data transmitted from camera 3 and audio data collected by audio collection unit 7. Viewing device communication unit 6d receives the video data and audio data transmitted from camera 3, transmits the audio data collected by audio collection unit 7 to camera 3, and transmits and receives signals to and from camera 3. Audio collection unit 7 collects an audio of the viewer.

When camera video transmission and playback system 1 according to the first exemplary embodiment shoots and transmits a video, viewing device 6 is connected to the plurality of cameras 3 via Internet 8. The video data shot by imaging unit 4 of each camera 3 is recorded in camera recording unit 2c of main body unit 2, is simultaneously transmitted to viewing device 6 via Internet 8 by camera communication unit 2d. The video data is then is displayed on viewing device image unit 6b of viewing device 6, and is simultaneously recorded in viewing device recording unit 6c. Audio collection unit 7 (for example, a microphone) of viewing device 6 in the first exemplary embodiment enables, for example, an audio of the viewer to be recorded in viewing device recording unit 6c of viewing device 6, to be simultaneously transmitted to any camera 3 via Internet 8, and to be recorded in camera recording unit 2c of main body unit 2.

As described above, in camera video transmission and playback system 1 according to the first exemplary embodiment, the video data is transmitted only from camera 3 to viewing device 6, but the audio data is transmitted from camera 3 to viewing device 6 and from viewing device 6 to camera 3. As described above, in camera video transmission and playback system 1 according to the first exemplary embodiment, the camera operator views a scene before the operator with the naked eye, and simultaneously the viewer views a video which is displayed on viewing device image unit 6b of viewing device 6 and is transmitted from the camera of the camera operator. That is, the camera operator and the viewer can communicate with each other through a mutual conversation via the microphone while sharing a substantially simultaneous video (scene).

### 2.1.2. Structure of video data and audio data

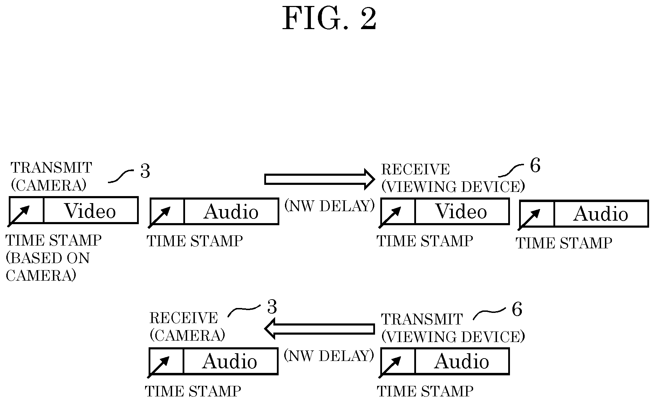

As illustrated in an upper part of FIG. 2, each of video data (Video) and audio data (Audio) transmitted from camera 3 to viewing device 6 is time-stamped based on the camera. Note that each of the plurality of cameras 3 in the first exemplary embodiment is synchronized on a time axis by a network time protocol (NTP). Internet 8 through which the video data and audio data are transmitted from each camera 3 to viewing device 6 causes a network (NW) delay in the video data and audio data.

In addition, as illustrated in a lower part of FIG. 2, the audio data transmitted from viewing device 6 to each camera 3 is also time-stamped, and a network delay occurs in the audio data.

### 2.1.3. Image example of image unit and role of marker

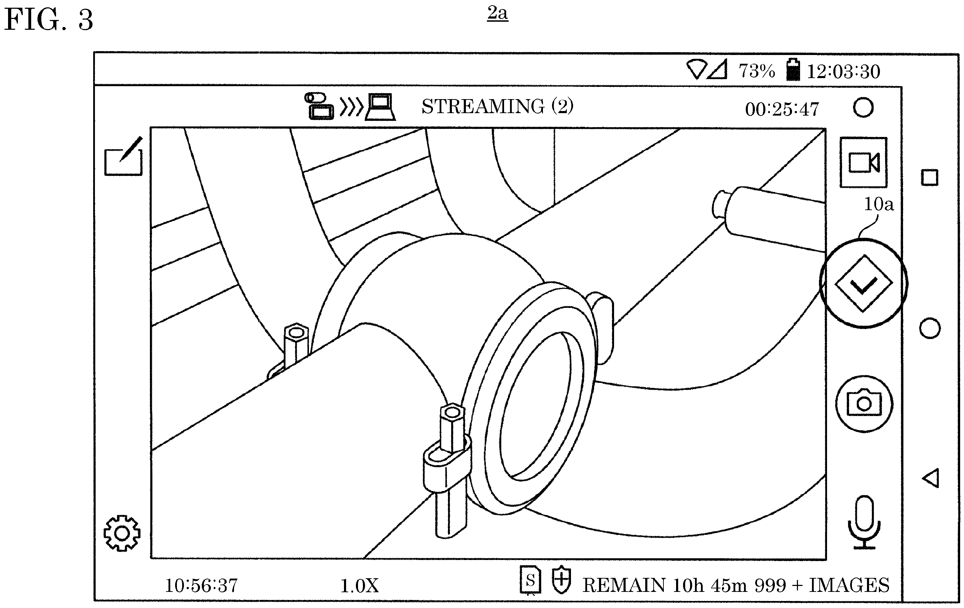

FIG. 3 illustrates an image example of camera image unit 2b in main body unit 2 of camera 3 at a time when camera 3 in camera video transmission and playback system 1 according to the first exemplary embodiment shoots and transmits a video. A video (moving image) shot by imaging unit 4 is displayed on camera image unit 2b. In the image example illustrated in FIG. 3, a variety of buttons are provided around the video shot by imaging unit 4. These buttons include marker setting button 10a. The "marker setting button" will be described later.

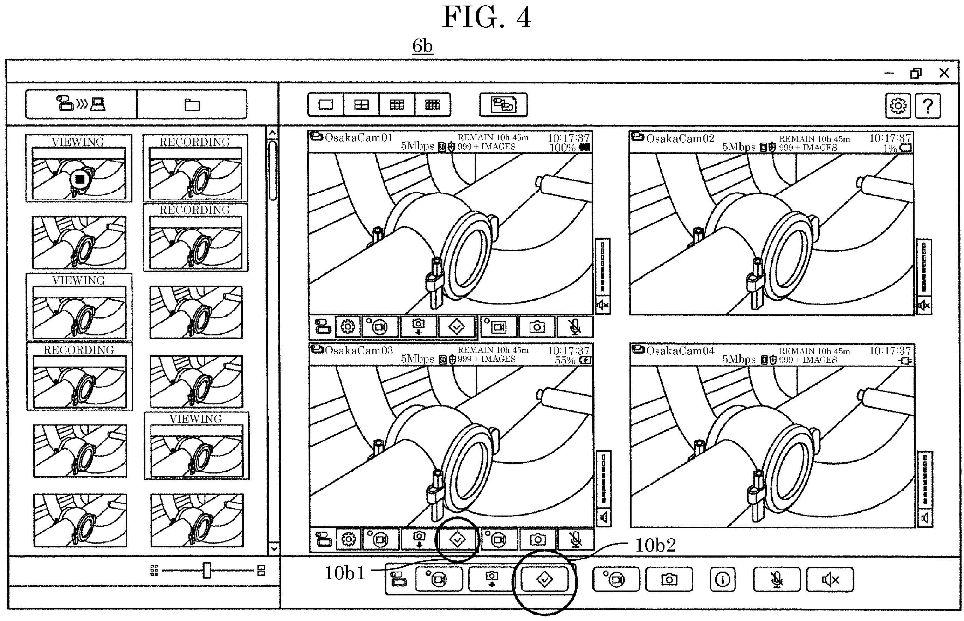

FIG. 4 illustrates an image example of viewing device image unit 6b in viewing device 6 at the time when camera 3 in camera video transmission and playback system 1 according to the first exemplary embodiment shoots and transmits a video. Videos shot by the plurality of cameras 3 are reduced in size to be tiled on a left part of viewing device image unit 6b. The videos, which are reduce in size to be tiled, are intended to indicate the presence of cameras 3 connected to viewing device 6. Thus, the small videos may be still images or thumbnails. Further, as illustrated in FIG. 4, up to four images are selected from the small videos arranged on the left part of viewing device image unit 6b, and the selected images are enlarged and displayed as moving images on an area between a central part and right part of viewing device image unit 6b.

Also in the image example illustrated in FIG. 4, various buttons are provided on an entire vicinity of up to four videos, and various buttons are provided also on a vicinity of each of up to four videos. The various buttons include first and second marker setting buttons 10b1, 10b2 as with the various buttons in the vicinity of the video shot by imaging unit 4 of camera 3 illustrated in FIG. 3.

First marker setting button 10b1 is used to set a marker to each of the videos selectively displayed. That is, first marker setting button 10b1 is used to assign a marker to an image frame of currently (namely, a time of pressing first marker setting button 10b1) displayed video data in each of the videos selectively displayed. The video data displayed as moving images on the area between the central part and right part of viewing device image unit 6b illustrated in FIG. 4 is recorded in viewing device recording unit 6c as described above. Therefore, when the marker is set by using first marker setting button 10b1, the video data of each target camera is recorded in viewing device recording unit 6c as data with the marker.

Second marker setting button 10b2 is used not to set the marker only to the video of the target camera but used to simultaneously set markers to the four videos selected on viewing device 6. That is, second marker setting button 10b2 is used to simultaneously assign the markers to image frames of the currently (namely, a time of pressing second marker setting button 10b2) displayed video data in all the four videos selected on viewing device 6.

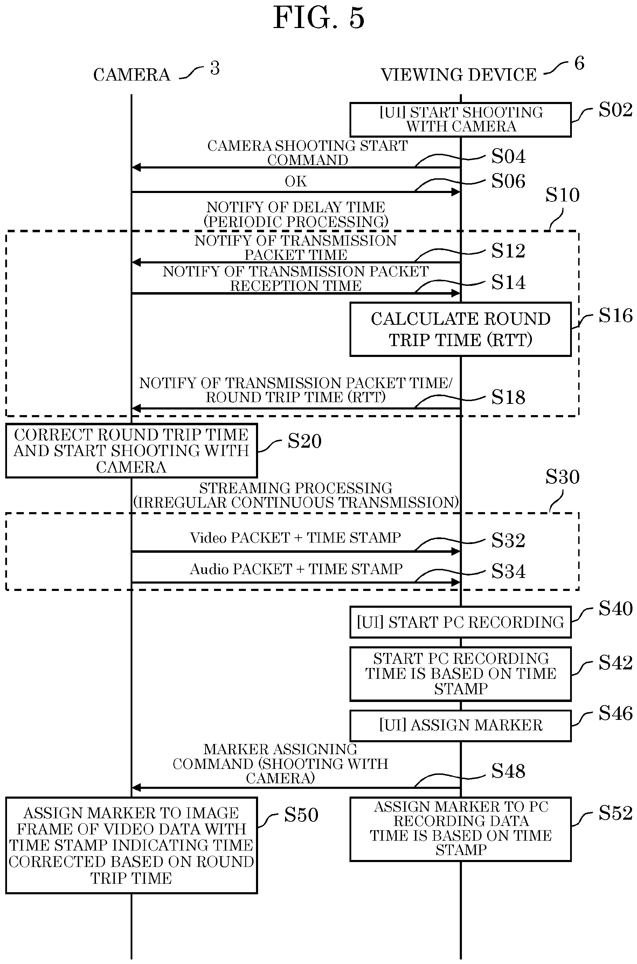

Further, the markers set by using first and second marker setting buttons 10b1, 10b2 may be assigned to any video data in addition to the video data recorded in viewing device 6. A marker setting command illustrated in FIG. 1A enables assignment of a marker to a portion at an appropriate time in the video data recorded in each camera 3 which is a transmission source of the video data recorded in viewing device 6, namely, an image frame with an appropriate time stamp. An operation for assigning a marker to video data recorded in each camera 3 will be described later with reference to FIG. 5.

Note that marker setting button 10a in the image example of camera image unit 2b illustrated in FIG. 3 is used to assign a marker to an image frame of currently (namely, a time of pressing marker setting button 10a) displayed video data in the video displayed on camera image unit 2b. As described above, the video data displayed on camera image unit 2b is recorded in main body unit 2 of camera 3. Therefore, when a marker is set with marker setting button 10a, the marker is assigned to the image frame of the video data at the time of pressing marker setting button 10a, and the image frame is recorded in main body unit 2 of camera 3.

### 2.2. Operation of camera video transmission and playback system at the time of shooting and transmitting video

FIG. 5 is a sequence chart illustrating camera shooting start processing, delay time notification processing, streaming processing, recording start processing of viewing device 6 (PC), and marker assigning processing in camera video transmission and playback system 1 according to the first exemplary embodiment at the time of shooting and transmitting a video. With reference to FIG. 5, the sequence, described below, includes:
shooting start processing of camera 3 through
marker assigning processing in which inputting the marker setting command into viewing device 6 causes assignment of a marker to a portion at an appropriate time in video data recorded in camera 3 which is the transmission source of the video data recorded in viewing device 6.

First, the camera is instructed to start shooting via a user interface (UI) of viewing device 6 (S02). A camera shooting start command is transmitted from viewing device 6 to camera 3 (S04), and camera 3 prepares the start of shooting (S06).

Subsequently, a delay time notification (periodic processing) is performed (S10). In the delay time notification (periodic processing), first, viewing device 6 notifies each camera 3 of a transmission packet time (S12). Each camera 3 notifies viewing device 6 of a transmission packet reception time (S14). When the transmission packet reception time notification arrives at viewing device 6, viewing device 6 calculates a round trip time (RTT) in the packet transmission (S16). Viewing device 6 notifies each camera 3 of the transmission packet time and the round trip time (RTT)) based on the calculation (S18).

Each camera 3 corrects the round trip time based on the newly notified round trip time (RTT), starts camera shooting (S20), and generates video data.

Subsequently, streaming processing is performed between each camera 3 and viewing device 6 (S30). Streaming is transmitted continuously and irregularly. In the streaming processing, a video packet with a time stamp (S32) and an audio packet with a time stamp (S34) are streamed. Although FIG. 5 illustrates only the streaming from each camera 3 to viewing device 6, a time-stamped audio packet may also be streamed from viewing device 6 to each camera 3 (with reference to FIGS. 1A and 2).

PC (viewing device 6) recording start is instructed via the user interface (UI) of viewing device 6 (S40). As a result, the video data from each camera 3 starts to be recorded in viewing device 6 (PC) (S42). The time is based on the time stamp given to the video data from each camera 3.

Herein, each of predetermined cameras 3 is instructed to assign a marker via the user interface (UI) of viewing device 6 (S46). Viewing device 6 transmits a marker assigning command to each camera 3 (S48).

Camera controller 2a of each camera 3 makes a correction for the round trip time to the video data that is captured by and is being recorded by itself, and assigns a marker to the video data (S50). That is, each camera 3 assigns the marker to an image frame with the time stamp indicating the time corrected based on the round trip time (RTT) in the video data with the time stamp that is captured by and is being recorded in itself.

Viewing device 6 assigns a marker to the video data that is being recorded in viewing device recording unit 6c. At this time, the marker is assigned to the video data displayed on viewing device image unit 6b at the time of instructing the marker assignment. That is, the time is based on the time stamp of the video data (S52).

### 2.3. The camera video transmission and playback system at a time of capturing and playing back content

### 2.3.1. Overall configuration of the camera video transmission and playback system at the time of capturing and playing back content

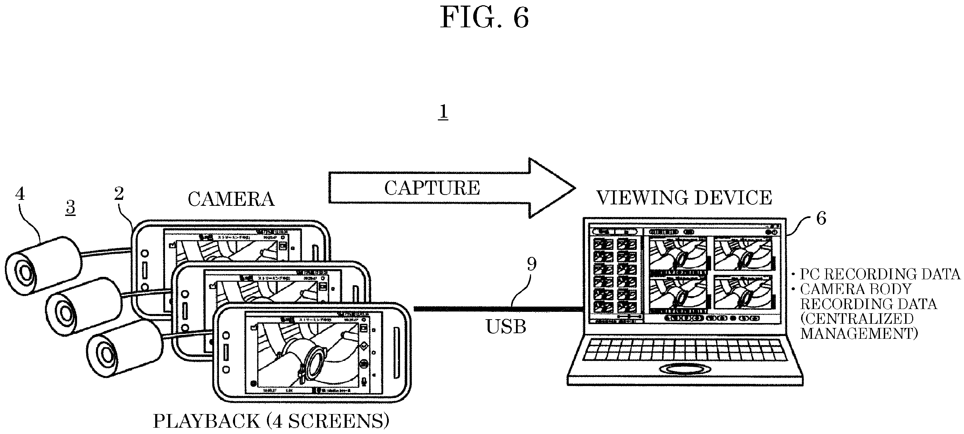

FIG. 6 is an overall configuration view of camera video transmission and playback system 1 according to the first exemplary embodiment at the time of capturing and playing back content. Camera video transmission and playback system 1 illustrated in FIG. 6 includes one or the plurality of cameras 3 and viewing device 6 as with camera video transmission and playback system 1 illustrated in FIG. 1A. Each camera 3 and viewing device 6 are connected to each other by, for example, USB cable 9, but may be connected without a network.

In addition to the video data (PC recording data) that is transmitted from each camera 3 via Internet 8 and recorded in viewing device recording unit 6c, viewing device 6 can capture the video data (camera body recording data) recorded in camera recording unit 2c of each camera 3 as contents via USB cable 9 and play back the content as a moving image. In such a manner, taking the video data recorded in each camera 3 into viewing device 6 enables centralized management of the video data.

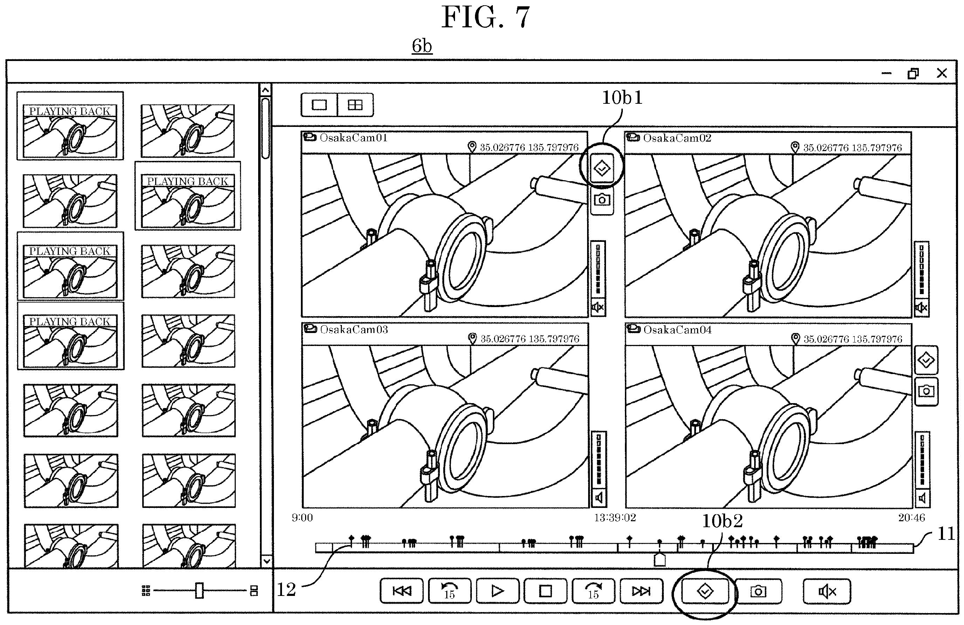

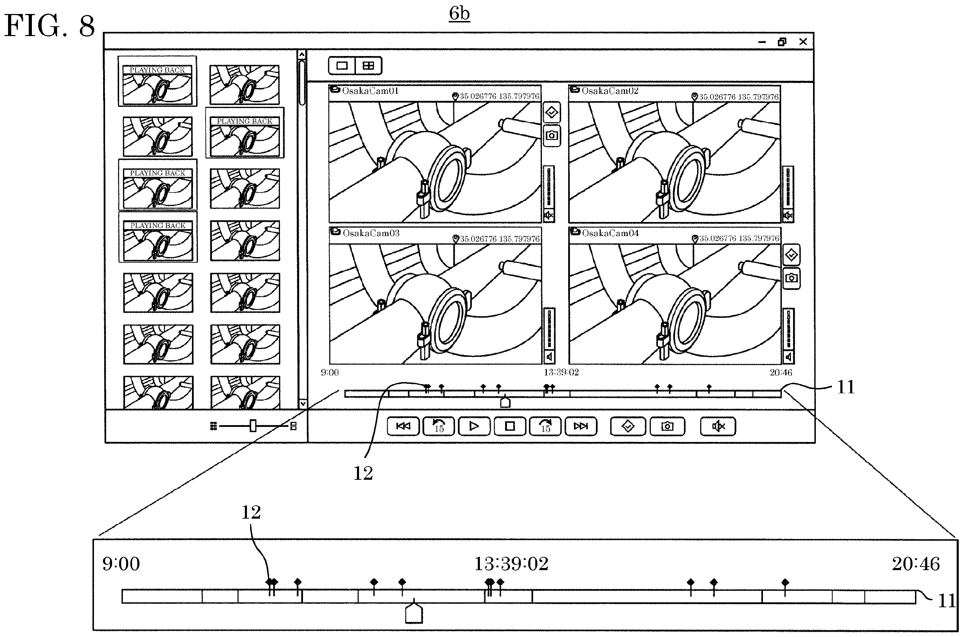

FIG. 7 illustrates an image example of viewing device image unit 6b in viewing device 6 at a time when viewing device 6 in camera video transmission and playback system 1 according to the first exemplary embodiment captures and plays back contents. FIG. 8 illustrates an image example of viewing device image unit 6b in viewing device 6, enlarged (within the image example) time axis 11 and display markers 12 at the time when viewing device 6 captures and plays back contents. The videos recorded in viewing device recording unit 6c and shot by the plurality of cameras 3 and the videos recorded in the plurality of cameras 3 are reduced in size to be tiled on the left part of viewing device image unit 6b. The tiled small videos indicate presence of "video data in viewing device recording unit 6c transmitted while being shot by cameras 3" and presence of "video data in cameras 3 captured in viewing device 6 via USB cable 9". Thus, the small-sized videos may be still images or thumbnails.

Further, as illustrated in FIG. 7, up to four images are selected from the small videos tiled on the left part of viewing device image unit 6b, and are synchronously played back as moving images on the area between the central part and right part of viewing device image unit 6b. At this time, viewing device controller 6a synchronously plays back the video data on the four images based on the time stamps given to the four video data, namely, with the time stamps being used as absolute time axes.

In the image example illustrated in FIG. 7, various buttons are provided in an entire vicinity of the videos on up to four images, and various buttons are provided also in a vicinity of each of the videos on the four images. For example, the various buttons (or the like) include first and second marker setting buttons 10b1, 10b2 as with the various buttons in the image example illustrated in FIG. 3.

Furthermore, in the image examples illustrated in FIGS. 7 and 8, time axis 11 and display markers 12 are displayed. Display markers 12 each are indicated by a line segment with diamond shape as illustrated in an enlarged manner in FIG. 8. These display markers 12 indicate that the markers, which have been assigned to the video data recorded in camera recording unit 2c by the marker setting command input through viewing device 6 or by pressing down marker setting button 10a of camera image unit 2b when camera 3 shoots and transmits the video, exist on displayed time axis 11. Alternatively, display markers 12 indicate that the markers, which have been assigned to the video data displayed on and being simultaneously recorded in viewing device 6 (the transmission source is any one of cameras 3) by the marker setting command input through viewing device 6 when camera 3 shoots and transmits the video, exist on displayed time axis 11.

### 2.3.2. Operation of camera video transmission and playback system at the time of capturing and playing back contents

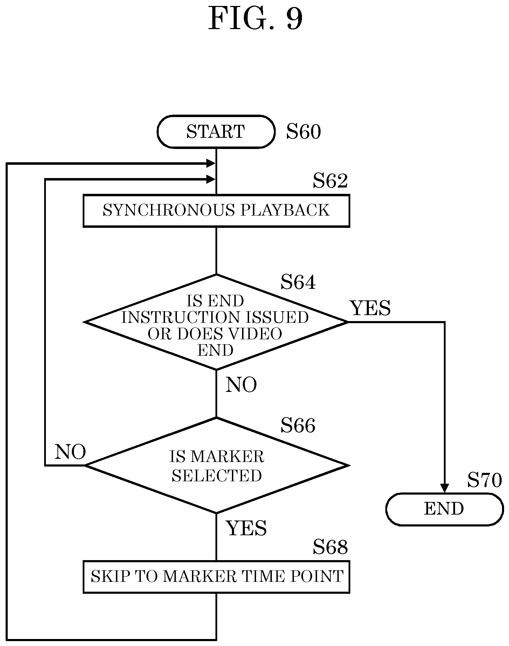

For example, clicking one of display markers 12 enables control of the playback operations performed by viewing device 6 and camera 3 such that a playback position is skipped to a time-stamped portion with the marker in each of the four videos. FIG. 9 is a flowchart illustrating synchronous playback processing and skip processing through marker selection for four videos recorded in viewing device recording unit 6c and captured from camera 3 USB-connected to viewing device 6. First, as described above, viewing device 6 and connected cameras 3 synchronously play back the four videos based on the time stamps given to the respective sets of video data (S62). When a playback end instruction is issued or the video data is ended (YES in S64), the playback processing ends (S70).

When the video data is not ended or the playback end instruction is not issued (NO in S64) and the marker is not selected (namely, specific display marker 12 is not clicked) (NO in S66), the synchronous playback of the four videos is continued (S62). When the marker is selected (namely, specific display marker 12 is clicked) (YES in S66), the playback position is skipped to the image with selected display marker 12 (S68) in the video whose marker is selected. From that time, the playback of the four sets of video data being played back is synchronized based on the time stamp of the video data whose marker is selected (S62). When the playback end instruction is issued or the video data is ended (YES in S64), the playback processing ends (S70).

### 2.4. Effects and others

As described above, in the present exemplary embodiment, camera video transmission and playback system 1 includes one or the plurality of cameras 3 and viewing device 6. Each camera 3 generates and records video data (first video data) synchronously time-stamped on Internet 8, and simultaneously transmits the video data to viewing device 6 via Internet 8. Viewing device 6 displays the video data transmitted from each camera 3 via Internet 8 and simultaneously records the video data as second video data. Viewing device 6 periodically calculates the round trip time (RTT) in packet transmission to or from each camera 3. Here, when each camera 3 receives the marker assigning command from viewing device 6 via Internet 8, each camera 3 assigns a marker to an image frame with a time stamp indicating a time corrected based on the round trip time in the video data that is captured by and is being recorded in itself.

As a result, camera video transmission and playback system 1 enables a viewer to, when assigning a marker to a portion at a certain time in video transmitted from a camera operator, set the marker to an appropriate portion of the video data to be recorded in camera 3 of the camera operator.

### 3. Second exemplary embodiment

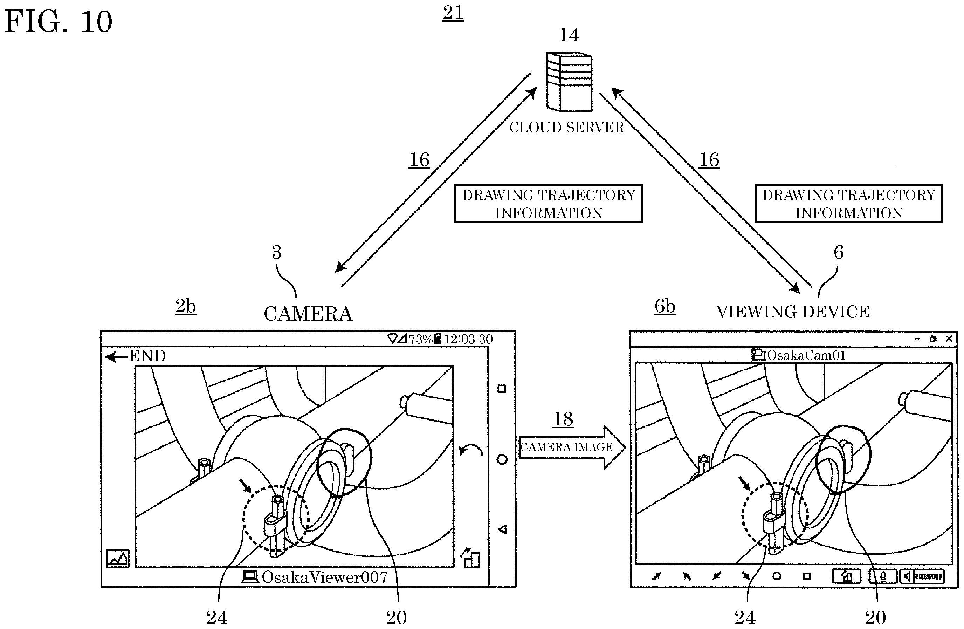

A second exemplary embodiment will be described below with reference to FIG. 10.

### 3.1. Configuration and operation of camera video transmission and playback system

FIG. 10 is an overall configuration view of camera video transmission and playback system 21 according to the second exemplary embodiment. Camera video transmission and playback system 21 according to the second exemplary embodiment includes camera 3 and viewing device 6 as with camera video transmission and playback system 1 according to the first exemplary embodiment. FIG. 10 illustrates an image example of camera image unit 2b in main body unit 2 of camera 3 and an image example of viewing device image unit 6b in viewing device 6.

As with the first exemplary embodiment, video data captured by camera 3 is transmitted to viewing device 6. Here, in camera video transmission and playback system 21 according to the second exemplary embodiment, video data captured by camera 3 is transmitted to viewing device 6 via peer-to-peer network 18 such as user datagram protocol (UDP) communication. Peer-to-peer network 18 achieves the real-time property of camera image transmission. As a result, camera 3 and viewing device 6 share the video data transmitted from camera 3, and the shared video data is displayed on camera image unit 2b and viewing device image unit 6b. Both the video data in the image example of camera image unit 2b and the video data in the image example of viewing device image unit 6b in camera video transmission and playback system 21 illustrated in FIG. 10 are assumed to be still images. However, the video data transmitted by camera 3 to viewing device 6 may be moving images.

In addition, camera 3 and viewing device 6 can display drawings such as figures using a user interface on the video data displayed on camera image unit 2b and viewing device image unit 6b, respectively. Further, a figure (in FIG. 10, freehand figure 20) set on camera image unit 2b in camera 3 by drawing or the like with a pointing device is transmitted to viewing device 6 to be displayed on viewing device image unit 6b. In addition, a figure (in FIG. 10, circular figure 24) set on viewing device image unit 6b in viewing device 6 by drawing or the like with any drawing tool can be transmitted to camera 3 which is a transmission source of the video data to be displayed on camera image unit 2b.

In camera video transmission and playback system 21, trajectory and coordinate information (drawing trajectory information) regarding a figure or drawing transmitted from camera 3 to viewing device 6, and trajectory and coordinate information (drawing trajectory information) regarding a figure or drawing transmitted from viewing device 6 to camera 3 are transmitted through transmission control protocol (TCP) network 16 using cloud server 14. TCP network 16 using cloud server 14 achieves accuracy of data transmission and reception.

### 3.2. Effects and others

As described above, in the present exemplary embodiment, camera video transmission and playback system 21 includes camera 3, viewing device 6, and cloud server 14. Camera 3 transmits video data to viewing device 6 via peer-to-peer network 18. Camera 3 and viewing device 6 transmit the drawing trajectory information to each other through TCP network 16 using cloud server 14. As a result, camera 3 and viewing device 6 can share the drawing displayed on the shared video data.

### 4. Other exemplary embodiments

The first and second exemplary embodiments have been described above as examples of the technique disclosed in the present application. However, the technique of the present disclosure is not limited to these exemplary embodiments, and is applicable to any exemplary embodiments in which a change, a replacement, an addition, or an omission is appropriately made. The constituent elements described in the above first and second exemplary embodiments may be combined to carry out new exemplary embodiments.

In addition, to describe the exemplary embodiments, the accompanying drawings and the detailed description have been provided. Accordingly, the constituent elements described in the accompanying drawings and the detailed description include not only constituent elements essential for solving the issue but also constituent elements that are not essential for solving the issue in order to exemplify the above-described technique. Therefore, it should not be immediately construed that these unessential constituent elements are essential even if these constituent elements are described in the accompanying drawings and the detailed description.

Since the above described exemplary embodiments are for exemplifying the technique of the present disclosure, various modifications, replacements, additions, or omissions can be made within the scope of the appended claims or their equivalents.

### INDUSTRIAL APPLICABILITY

The present disclosure is applicable to a camera video transmission and playback system including a plurality of wearable cameras, tablet terminals or mobile terminals, and a viewing device.

### REFERENCE MARKS IN THE DRAWINGS

- 1, 21: camera video transmission and playback system
- 2: main body unit
- 2a: camera controller
- 2b: camera image unit
- 2c: camera recording unit
- 2d: camera communication unit
- 3: camera
- 4: imaging unit
- 5: audio collection unit
- 6: viewing device
- 6a: viewing device controller
- 6b: viewing device image unit
- 6c: viewing device recording unit
- 6d: viewing device communication unit
- 7: audio collection unit
- 8: Internet
- 9: USB cable
- 10a: marker setting button
- 10b1: first marker setting button
- 10b2: second marker setting button
- 11: time axis
- 12: display marker
- 14: cloud server
- 16: TCP network
- 18: peer-to-peer network
- 20: freehand figure
- 24: circular figure

## Claims

1. A camera video transmission and playback system comprising:
a camera; and
a viewing device, wherein
the camera is configured to generate and record first video data including a plurality of image frames with time stamps synchronized on an external network, and simultaneously transmits the first video data to the viewing device via the external network,
the viewing device is configured to display the first video data transmitted from the camera via the external network, and simultaneously record the first video data as second video data, and to periodically calculate a round trip time in packet transmission to and from the camera, and
the camera assigns, when receiving a marker assigning command from the viewing device via the external network, a marker to one of the plurality of image frames with a time stamp indicating a time corrected based on the round trip time in the first video data that is captured by and is being recorded in the camera.

2. The camera video transmission and playback system according to claim 1, wherein the viewing device assigns a marker to one of the plurality of image frames in the first video data displayed when transmitting the marker assigning command, based on the time indicated by the time stamp of the first video data and simultaneously records the first video data as the second video data.

3. The camera video transmission and playback system according to claim 2, wherein the viewing device synchronously plays back (i) the first video data that is obtain from the camera via a cable and is recorded in the camera and (ii) the second video data that is transmitted from the camera via the external network and is recorded in the viewing device, in synchronization with each other, based on the time stamps given to the first and second video data, respectively.

4. The camera video transmission and playback system according to claim 3, wherein the viewing device causes, when a marker selection for selecting the marker is made by input into the viewing device, respective playback positions in the first video data and the second video data whose markers are selected to skip to the image frames with the selected markers, and starts synchronous playback from the image frames with the selected markers based on the time stamps.

5. The camera video transmission and playback system according to claim 1, further comprising a cloud server, wherein
the camera includes a camera image unit, displays the first video data on the camera image unit, transmits the first video data to the viewing device via a peer-to-peer network, and transmits, to the viewing device via the cloud server, drawing trajectory information for setting a drawing to be superimposed and displayed on the first video data displayed on the camera image unit, and
the viewing device includes a viewing device image unit, displays the first video data transmitted via the peer-to-peer network on the viewing device image unit, and transmits, to the camera via the cloud server, drawing trajectory information for setting a drawing to be superimposed and displayed on the first video data displayed on the viewing device image unit.

6. A camera comprising:
a camera recording unit configured to record video data including a plurality of image frames with time stamps synchronized on an external network; and
a camera communication unit configured to transmit the video data to a viewing device via the external network just when the camera recording unit records the video data, and receive, from the viewing device, a marker assigning command for assigning a marker to one of the plurality of image frames in the video data, wherein the camera recording unit assigns, in response to the marker assigning command, the marker to the one of the plurality of image frames with a time stamp indicating a time corrected based on a round trip time in packet transmission of the video data, the round trip time being periodically calculated by the viewing device, and records the video data.

7. A viewing device comprising:
a viewing device recording unit configured to record video data including a plurality of image frames with time stamps synchronized on an external network, the video data being transmitted from a camera via the external network;
a viewing device controller configured to periodically calculate a round trip time in packet transmission to and from the camera; and
a viewing device communication unit configured to transmit, to the camera via the external network, a marker assigning command for assigning a marker to one of the plurality of image frames with a time stamp indicating a time corrected based on the calculated round trip time in the video data that is captured by and is being recorded in the camera.
